# EUROPÄISCHE PATENTANMELDUNG

(11) **EP 1 605 247 A1**
(43) Veröffentlichungstag der Anmeldung: **14.12.2005**
(21) Anmeldenummer: 05012175.5
(22) Anmeldetag: 07.06.2005
(51) Int. Cl.: G01N 17/04

(54) **Messprobe für die Bestimmung der Korrosionsangriffstiefe sowie Verfahren zur Messung der Korrosionsangriffstiefe und Verwendung einer Messprobe**

(30) Priorität: 09.06.2004 CH 9762004
(71) Anmelder: Büchler, Markus, 8180 Bülach (CH)
(72) Erfinder: Büchler, Markus, 8180 Bülach (CH)
(74) Vertreter: Isler, Jörg

(57) **Zusammenfassung**

Die vorliegende Erfindung betrifft eine Messprobe zur Bestimmung der Korrosionsangriffstiefe durch Widerstandsmessung zwischen einem Korrosionskörper (1) und einer Elektrode (2) welche durch einen Isolator (3) getrennt und mit Kabeln (4, 5) kontaktiert sind und durch einen Körper (6) von Feuchtigkeitszutritt geschützt sind.

Durch Verwendung eines Isolators (3) in Kombination mit einem hygroskopischen Salz entsteht bei Perforation des Korrosionskörpers (1) durch Korrosion ein leitfähiger Elektrolyt. Die Perforation kann daher durch einfache Widerstandsmessung bestimmt werden.

## Beschreibung

### Technisches Gebiet

Die Erfindung betrifft eine Messprobe für die Bestimmung des Korrosionsangriffs durch Korrosion nach dem Oberbegriff des ersten Anspruchs.

Die Erfindung betrifft auch ein Verfahren zur Messung der Korrosionsangriffstiefe mit einer Messprobe und die Verwendung einer Messprobe nach den Oberbegriffen der entsprechenden unabhängigen Ansprüche.

### Stand der Technik

Induzierte Wechselspannungen auf kathodisch geschützten Rohrleitungen stellen ein erhebliches Problem für die Betriebssicherheit dieser Anlagen dar. Bis heute besteht kein etabliertes Messprinzip für die Charakterisierung der Korrosionsgefährdung oder die Bestimmung der Angriffstiefe. Typischerweise erfolgt die Charakterisierung des Korrosionszustandes unter Verwendung von sogenannten Messproben. Diese bestehen aus einer Metalloberfläche mit einer Fläche von ca. 1 cm². Diese Messproben werden im Bereich der Rohrleitung vergraben und elektrisch mit dieser verbunden. Dadurch wird eine künstliche Fehlstelle erzeugt, die jederzeit von der Rohrleitung getrennt und elektrochemisch charakterisiert werden kann.

Es sind auch Messproben für die Bestimmung des Korrosionsabtrags bekannt. Diese basieren auf der Bestimmung des Korrosionsangriffs durch Ultraschallmessung oder Messung der elektrischen Widerstandsveränderung durch die Verringerung des Querschnitts. Beide Verfahren sind nicht in der Lage lokale Korrosionsangriffe zu detektieren, da sie primär empfindlich sind auf den Gesamtabtrag. Zudem sind für die Messung Spezialgeräte erforderlich. Die Problematik besteht dabei vor allem darin, dass der Korrosionsangriff sehr punktuell sein kann. Die Verkalkung der Oberfläche der Messprobe kann sehr lokale Korrosionsangriffe mit Angriffstiefen im Bereich von Millimetern bei Lochdurchmessern von einigen Mikrometern zur Folge haben. Die Detektion des Korrosionsangriffs wird daher stark erschwert und ist mit den gängigen Verfahren nicht oder nur sehr fehlerhaft möglich. Für den Betreiber einer Gasleitung ist aber in erster Linie die Kenntnis der Perforation der Gasleitung von Bedeutung. Primär interessiert daher die maximale Angriffstiefe und nur bedingt der Gesamtkorrosionsabtrag. Die bisher verfügbaren Methoden ermöglichen aber primär die Bestimmung des Gesamtkorrosionsabtrags.

Aus der Untersuchung von Lochfrasskorrosion ist ein Verfahren bekannt, wonach die Perforation von Korrosionskörpern durch Widerstandsmessung bestimmt wird. Dieses Verfahren wurde für Laboruntersuchungen entwickelt. Dabei wird der zu untersuchende Korrosionskörper in Kontakt mit dem Elektrolyten gebracht. Hinter dem Korrosionskörper liegt eine zweite elektrisch leitende Elektrode, welche durch ein Fliesspapier vom Korrosionskörper getrennt ist. Sobald der Korrosionsangriff den Korrosionskörper perforiert hat, wird das Fliesspapier benetzt und der elektrische Widerstand zwischen dem Korrosionskörper und der Elektrode verringert sich dramatisch. Eine einfache Widerstandsmessung erlaubt also die Bestimmung des Zeitpunktes der Perforation.

Die Übertragung dieses Laborverfahrens auf Messproben ist nicht möglich, da der Widerstand auch durch kondensiertes Wasser im Messaufbau verringert wird. Bei den langen Auslagerungsdauern besteht auch die Möglichkeit des Eindringens von Umgebungswasser in den Messaufbau. In beiden Fällen verringert sich der Widerstand zwischen Korrosionskörper und Elektrode und zeigt fälschlicherweise eine Perforation an.

### Darstellung der Erfindung

Der Erfindung liegt die Aufgabe zugrunde, bei einer Messprobe und einem Verfahren für die Bestimmung des Korrosionsangriffs durch Korrosion der eingangs genannten Art die Korrosionsangriffstiefe zu bestimmen und dabei die Nachteile des Standes der Technik zu vermeiden.

Erfindungsgemäss wird dies durch die Merkmale des ersten Anspruches erreicht.

Kern der Erfindung ist, dass die Korrosionsangriffstiefe durch Perforation eines Korrosionskörpers durch Widerstandsmessung zwischen Korrosionskörper und Elektrode erfasst wird, wobei die Messprobe derartig aufgebaut ist, dass sie auch bei langer Auslagerung in feuchter Umgebung keine Fehlmessungen ergibt.

Der Vorteil der Erfindung besteht unter anderem darin, dass durch eine einfache Widerstandsmessung eine Aussage möglich ist, ob eine bestimmte Angriffstiefe überschritten ist. Damit ist die Kontrolle von Alarmwerten mithilfe von einfachen Messgeräten möglich.
Die Messprobe besteht aus einem Korrosionskörper mit definierter Dicke. Während die Vorderseite des Korrosionskörpers im Kontakt mit dem Erdreich ist, wird auf der Rückseite eine Elektrode plaziert, welche durch ein Fliesspapier vom Korrosionskörper getrennt ist. Sowohl am Korrosionskörper wie auch an der Elektrode wird ein Kabel angeschlossen. Durch Vergiessen des gesamten Aufbaus mit einem Umhüllungskörper, insbesondere aus Kunststoff, und Aussparung einer definierten Fläche wird eine komplett gekapselte Messprobe erreicht, welche über lange Zeiträume stabil ist. Der Korrosionskörper, die Elektrode und das Fliesspapier werden dabei durch den Umhüllungskörper vom umgebenden Erdreich getrennt. Der Umhüllungskörper spart dabei zusätzlich eine definierte Messfläche aus und simuliert gleichzeitig die geometrische Konfiguration der Fehlstelle. Er übernimmt eine exakte Simulation der geometrischen Gegebenheiten bei einer Fehlstelle. Diese Messprobe lässt sich einfach in bestehende Anlagen integrieren und erfordert zur Messung lediglich ein Widerstandsmessgerät, welches bereits bei Routinekontrollen vom Betreiber benutzt wird.

Weitere vorteilhafte Ausgestaltungen der Erfindung ergeben sich aus den abhängigen Patentansprüchen.

### Kurze Beschreibung der Zeichnung

Im folgenden werden anhand der Zeichnungen Ausführungsbeispiele der Erfindung näher erläutert. Gleiche Elemente sind in den verschiedenen Figuren mit den gleichen Bezugszeichen versehen.

Es zeigen:
In Figur 1 ist die Messprobe für die Bestimmung der Angriffstiefe gezeigt.
In Figur 2 ist ein Träger für die Messproben mit dem zugehörigen Messpfosten und der Gasleitung gezeigt.
In Figur 3 sind Widerstandsmessungen an einer belasteten Messproben als Funktion der Zeit gezeigt. In der horizontalen Achse ist die Zeit in Stunden und in der vertikalen Achse ist der Widerstand aufgezeichnet.
In Figur 4 ist eine Messprobe für die Bestimmung der Angriffstiefe gezeigt, welche vollständig gasdicht verschlossen ist.
In Figur 5 ist eine Messprobe für die Bestimmung der Angriffstiefe von Stahl im Beton gezeigt.
Es sind nur die für das unmittelbare Verständnis der Erfindung wesentlichen Elemente gezeigt.

### Weg zur Ausführung der Erfindung

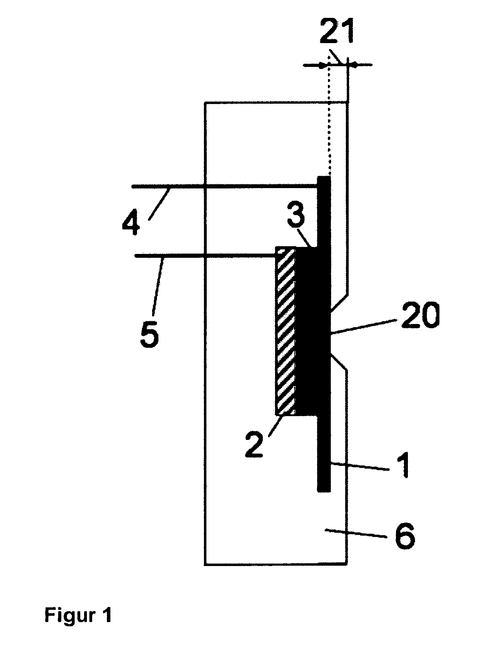

In Figur 1 ist die Messprobe für die Bestimmung der Korrosionsangriffstiefe gezeigt. Ein Korrosionskörper 1 wird durch einen Isolator 3 von einer Elektrode 2 getrennt. Der Korrosionskörper 1 besteht vorzugsweise aus demselben Werkstoff wie die zu untersuchende Rohrleitung und weist vorzugsweise eine Dicke im Bereich von 0.01 - 10 mm auf. Die Dicke wird dabei so gewählt, dass jeweils zutreffende Aussagen über die Korrosion der Rohrleitung getroffen werden können, wobei vorteilhafterweise ein Sicherheitsfaktor einbezogen wird. Die Elektrode 2 besteht aus einem beliebigen elektrisch leitenden Werkstoff, wie zum Beispiel nichtrostendem Stahl, Kupfer, Graphit, Titan oder Stahl. Der Isolator 3 kann aus einem saugfähigen Papier bestehen. Bewährt haben sich aber auch eine Lage aus hygroskopischem Salz oder eine Mischung aus Fliesspapier und Salz. Das Salz stellt sicher, dass auch bei ungünstigen Druckverhältnissen die eindringende Feuchtigkeit zur Ausbildung eines elektrisch leitenden Elektrolyten im Isolator 3 führt. Wesentlich ist, dass der Isolator in Abwesenheit von Feuchtigkeit keinen elektrischen Strom leitet. Beim Eindringen von Wasser oder Feuchtigkeit muss er leitend werden. Diese Leitfähigkeit wird durch Aufsaugen der Bodenlösung durch das Fliesspapier bei Perforation erreicht. Beim Fehlen eines hydrostatischen Drucks ist das Aufsaugen im geschlossenen Aufbau nicht sichergestellt. In diesem Fall kann die Kondensation der hohen Luftfeuchtigkeit im hygroskopischen Salz, welches als Isolator verwendet wird, zur Ausbildung eines elektrisch leitenden Elektrolyten führen. Möglich ist auch ein Fliesspapier zu verwenden, welches vorgängig mit einer Salzlösung getränkt und anschliessend getrocknet wurde. Der Korrosionskörper 1 wird durch ein Kabel 4 und die Elektrode 2 durch ein zweites Kabel 5 elektrisch kontaktiert. Diese Kontaktierung kann durch Löten, Klemmen, Schweissen oder ein anderes Verfahren erreicht werden, welches einen niederohmigen elektrischen Kontakt der Kabel 4 und 5 zu Korrosionskörper 1 und Elektrode 2 sicherstellt. Der Korrosionskörper 1, die Elektrode 2 und der Isolator 3 werden durch einen Körper 6 derart verschlossen, dass eine definierte Fläche 20 des Korrosionskörpers 1 ausgespart wird. In Figur 1 besteht der Körper aus einem Polymer 6. Der Körper kann aus einer Kunststoffmasse bestehen, welche durch Giessen hergestellt wird. Es ist aber auch möglich den Körper aus verschiedenen Komponenten zusammenzustellen und durch Kleben, Schweissen, Löten oder Schrauben zu verbinden. Somit kann der Körper auch aus beliebigen anderen Materialien oder Konstruktionen bestehen, wesentlich ist, dass ein Zutritt von Feuchtigkeit zum Isolator 3 verhindert wird. Weiter muss der Körper bei den hohen pH-Werten des Erdbodens im Bereich des Korrosionskörpers 1 beständig sein. Im Bereich der freien Oberfläche des Korrosionskörpers 1 muss sichergestellt sein, dass kein Unterwandern des Polymers 6 durch die Bodenlösung auftritt. Es sind auch Kombinationen von Kunststoffverguss und einem Gehäuse möglich. Von Vorteil sind Metallgehäuse, welche die Diffusion von Wasser und Wasserdampf effizient unterbinden.
Der Körper 6 kann dabei auch zur Simulation der geometrischen Bedingungen an der Fehlstelle herangezogen werden. So kann die Dicke 21 des Körpers 6 auf dem Korrosionskörper 1 die Dicke der Umhüllung des Rohrs simulieren. Der Spannungsfall bei der freien Fläche des Korrosionskörpers 1 aufgrund der Dicke des Körpers 6 ist damit vergleichbar mit jenem an einer realen Fehlstelle an der Rohrleitung.

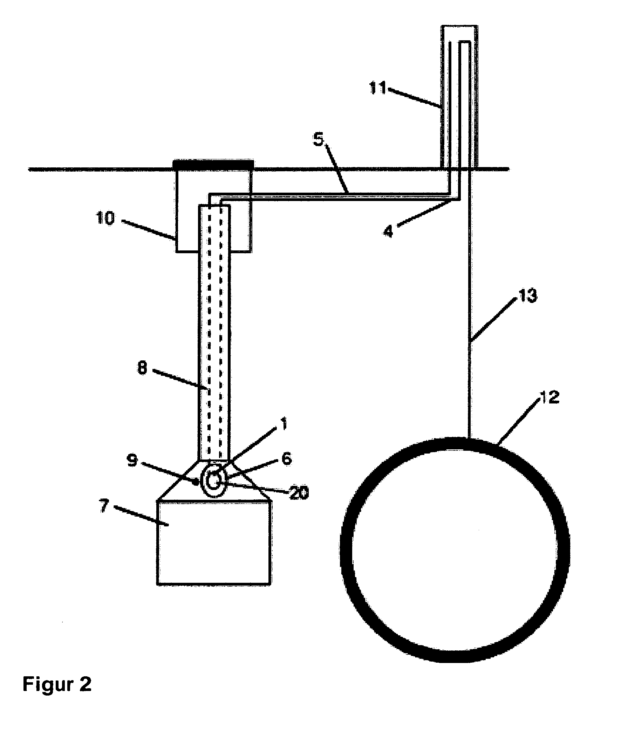

In Figur 2 ist der Einsatz der Messprobe zur Kontrolle einer Rohrleitung gezeigt. Der Körper 6 ist dabei in einen Träger 7 eingelassen, so dass die freie Fläche 20 des Korrosionskörpers 1 mit dem Erdboden in Kontakt ist. Die Orientierung des Korrosionskörpers 1 ist dabei in Richtung Erdoberfläche. Vorzugsweise beträgt der Winkel zur Erdoberfläche 45 Grad. Damit wird erreicht, dass bei Setzungsprozessen der Kontakt des Korrosionskörpers zum Erdboden nicht verloren geht. Weiter besteht die Möglichkeit, den Träger mit einem Rohr 8 zu verbinden und dieses in einen Schacht 10 zu führen. Die Kabel 4 und 5 können dabei in diesem Rohr 8 nach oben geführt werden. Es besteht weiter die Möglichkeit, eine Öffnung 9 im Träger im Bereich des Korrosionskörpers 1 zu erstellen und den Träger mit einem Elektrolyten zu füllen. Vorzugsweise wird der Träger mit Bentonit gefüllt. Die Öffnung 9 wird vorzugsweise mit einer Fritte oder einem Diaphragma verschlossen. Bei diesem Aufbau besteht die Möglichkeit eine Referenzelektrode durch das Rohr 8 in den Träger 7 einzubringen. Die Messung des Potenzials des Korrosionskörpers 1 ist dadurch in unmittelbarer Nähe möglich. Dadurch wird der Einfluss von Spannungsfällen im Erdboden verringert.
Die Kabel 4 und 5 werden vorzugsweise in einen Messkasten 11 geführt. In diesem Messkasten 11 besteht auch ein Anschluss 13 an eine Rohrleitung 12. Durch Verbindung des Kabels 4 mit dem Anschluss 13 wird der Korrosionskörper 1 analog zur Rohrleitung 12 polarisiert, um im Korrosionskörper die gleichen Korrosionsbedingungen zu erzielen wie in der Rohrleitung. Die Widerstandsmessung zwischen der Elektrode 2 und dem Korrosionskörpers 1 kann über die Kabel 4 und 5 einfach am Messkasten 11 vorgenommen werden.

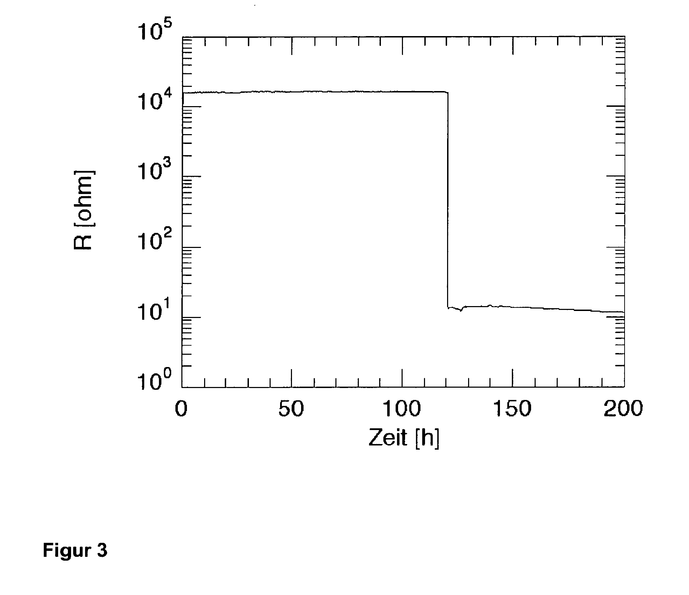

In Figur 3 sind die Ergebnisse einer Korrosionsuntersuchung mit einer Messprobe gezeigt. In der horizontalen Achse ist die Zeit und in der vertikalen Achse der elektrische Widerstand zwischen dem Korrosionskörpers 1 und der Elektrode 2 dargestellt. Es ist zu erkennen, dass eine sofortige Verringerung des Widerstands auftritt, sobald der Korrosionskörper 1 durch den Korrosionsprozess perforiert wird. Damit kann durch eine einfache Widerstandsmessung festgestellt werden, wann der Korrosionsangriff die Dicke des Korrosionskörpers 1 erreicht hat. Der Vorteil besteht dabei darin, dass diese Information unabhängig ist von der korrodierenden Fläche und vom Durchmesser des Angriffs. Dies bedeutet, dass auch nahezu vollständig verkalkte Proben mit Korrosionsangriffen von einigen Mikrometern Durchmesser exakt gemessen werden können.

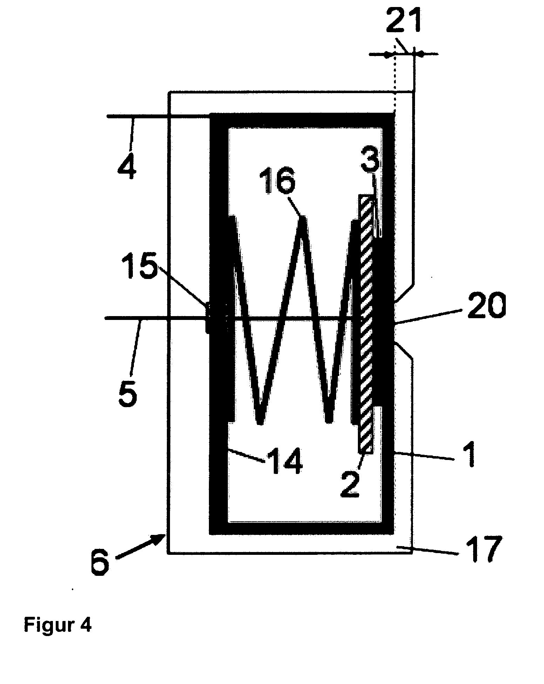

In Figur 4 ist ein Beispiel einer Messprobe gezeigt, bei welchem der Körper 6 aus einer Verbindung von Deckel 14, Durchführung 15 und Polymer 17 besteht. Dadurch entsteht ein vollständig gasdichter Aufbau mit definierter Fläche 20 des Korrosionskörpers. Dieser unterbindet die Diffusion von Wasser und Wasserdampf. Der Korrosionskörper 1 wurde dabei so geformt, dass ein Zylinder entsteht. Der Deckel 14 wird durch Löten oder Schweissen aufmontiert und das Kabel 5 wird durch die wasserdampfdichte Durchführung 15 geführt. Vorzugsweise besteht die Durchführung 15 aus einem Glasverguss. Im Inneren dieses gasdichten Behälters werden Elektrode 2 und Isolator 3 durch eine Feder 16 an den Korrosionskörper gedrückt. In diesem gasdichten Aufbau besteht auch die Möglichkeit durch Erzeugung eines Unterdrucks den Elektrolyten bei Perforation des Korrosionskörpers 1 in den Isolator 3 eindringen zu lassen.

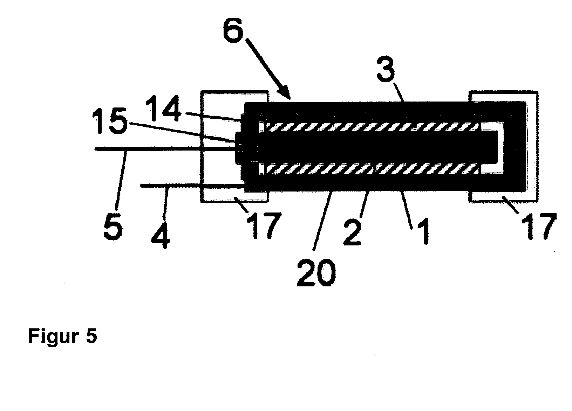

In Figur 5 ist die Anwendung der Messprobe für die Bestimmung der Angriffstiefe von Stahl in Beton gezeigt. Der Körper 6 wird durch Kombination von Deckel 14, Durchführung 15, Korrosionskörper 1 und Polymer 17 gebildet. Der Korrosionskörper 1 ist dabei als Rohr ausgebildet und der Isolator 3 sowie die Elektrode 2 sind ebenfalls hohlzylinderförmig. Die Elektrode 2 kann beispielsweise aus einem Blech aus Federstahl bestehen. Diese Elektrode 2 wird gerollt und in das Rohr eingeführt. Beim Entspannen drückt die Elektrode 2 den Isolator 3 gegen den Korrosionskörper 1. Das Polymer 6 bewirkt die Einstellung einer definierten Oberfläche.
Die Messprobe nach Fig. 5 wird dabei vorzugsweise an die Armierung /Bewehrung der zu untersuchenden Betonstruktur angeschlossen. Durch Verbindung des Kabels 4 mit der Armierung wird der Korrosionskörper 1 analog zur Armierung polarisiert, um im Korrosionskörper die gleichen Korrosionsbedingungen zu erzielen wie in der Armierung. Bei der Erstellung neuer Betonstrukturen kann die Messprobe direkt in die Betonstruktur eingegossen werden, sie kann aber insbesondere bei bestehenden Strukturen nachträglich eingebracht werden.

Selbstverständlich ist die Erfindung nicht auf die gezeigten und beschriebenen Anwendungsbeispiele beschränkt. So kann die Messprobe auch zur Kontrolle von anderen Systemen, wie z.B. Innenkorrosion von Rohrleitungen, Tanks oder ungeschützte Strukturen im Erdboden, wässrigen Medien wie z.B. im Meer, organischen Medien, insbesondere in der chemischen Industrie, oder allgemein in der chemischen Industrie angewandt werden. Natürlich ist auch eine kontinuierliche automatische Messung und Alarmierung bei Perforation möglich. Es ist zudem in gewissen Fällen sinnvoll die kontinuierliche Messung mit anderen Korrosionsmessgrössen, wie Korrosionspotential oder Korrosionsstrom zu kombinieren. Weiter muss der Isolator nicht zwingend auf dem Korrosionskörper aufliegen. So sind auch Lösungen denkbar, wo die Widerstandsmessung zwischen der Elektrode 2 und einer weiteren Elektrode erfolgt. Der Widerstand wird in diesem Fall zwischen der ersten und der zweiten Elektrode gemessen. Wesentlich ist aber, dass der Isolator 3 durch den Körper 6 von der Umgebung abgeschlossen wird.

## Patentansprüche

1. Messprobe zur Bestimmung der Korrosionsangriffstiefe durch Widerstandsmessung zwischen einem Korrosionskörper (1) und einer Elektrode (2), welche durch einen Isolator (3) getrennt und mit jeweils mindestens einem Kabel (4, 5) kontaktiert sind,
**dadurch gekennzeichnet,**
**dass** ein Körper (6) den Zutritt von Feuchtigkeit und / oder Wasser zum Isolator (3) verhindert.

2. Messprobe nach dem Anspruch 1,
**dadurch gekennzeichnet,**
**dass** der Körper (6) eine definierte Fläche (20) des Korrosionskörpers (1) ausspart.

3. Messprobe nach Anspruch 1 oder 2,
**dadurch gekennzeichnet,**
**dass** der Körper (6) aus einer Verbindung von Deckel (14), Korrosionskörper (1), Durchführung (15) und Polymer (17) besteht.

4. Messprobe nach einem der Ansprüche 1 bis 3,
**dadurch gekennzeichnet,**
**dass** der Isolator (3) aus einem Salz besteht oder ein Salz enthält.

5. Messprobe nach einem der vorhergehenden Ansprüche,
**dadurch gekennzeichnet,**
**dass** der Korrosionskörper (1) in Richtung Erdoberfläche orientiert ist.

6. Messprobe nach einem der vorhergehenden Ansprüche,
**dadurch gekennzeichnet,**
**dass** der Körper (6) in einen Träger (7) integriert ist.

7. Messprobe nach Anspruch 6,
**dadurch gekennzeichnet,**
**dass** der Träger (7) eine Öffnung (9) für die Messung des Potenzials des Korrosionskörpers (1) aufweist.

8. Messprobe nach einem der vorhergehenden Ansprüche,
**dadurch gekennzeichnet,**
**dass** der Korrosionskörpers (1) mit dem zu messenden Objekt (12) leitend verbunden ist.

9. Verfahren zur Messung der Korrosionsangriffstiefe mit einer Messprobe nach einem der Ansprüche 1 bis 8,
**dadurch gekennzeichnet,**
**dass** der Widerstand zwischen einem Korrosionskörper (1) und einer Elektrode (2), welche durch einen Isolator (3) getrennt und mit Kabeln (4, 5) kontaktiert sind, diskontinuierlich oder kontinuierlich gemessen wird.

10. Verwendung einer Messprobe nach einem der Ansprüche 1 bis 8
zur Bestimmung des Korrosionsangriffes von Werkstoffen in Erdboden, Beton, Rohrleitungen, anorganischen oder organischen Medien, in wässrigen Medien, Tanks, chemischer Industrie.
